# EUROPÄISCHE PATENTSCHRIFT

(11) **EP 2 815 132 B1**
(45) Veröffentlichungstag und Bekanntmachung des Hinweises auf die Patenterteilung: **20.07.2016**
(21) Anmeldenummer: 13704087.9
(22) Anmeldetag: 11.02.2013
(51) Int. Cl.: F04F 5/52

(54) **VERFAHREN ZUM BETREIBEN EINES UNTERDRUCKERZEUGERS UND UNTERDRUCKERZEUGER ZUR DURCHFÜHRUNG DES VERFAHRENS**
METHOD FOR OPERATING A SUCTION GENERATING DEVICE AND SUCTION GENERATING DEVICE FOR CARRYING OUT THE METHOD
PROCEDÉ DE FONCTIONNEMENT D'UN GÉNÉRATEUR DE SUCCION ET GÉNÉRATEUR DE SUCCION PERMETTANT LA MISE EN OEUVRE DUDIT PROCÉDÉ

(30) Priorität: 13.02.2012 DE 102012202124
(43) Veröffentlichungstag der Anmeldung: 24.12.2014
(73) Patentinhaber: J. Schmalz GmbH, 72293 Glatten (DE)
(72) Erfinder: HOLECEK, Thomas, 72250 Freudenstadt (DE); DUNKMANN, Walter, 76530 Baden-Baden (DE)
(74) Vertreter: DREISS Patentanwälte PartG mbB
(86) Internationale Anmeldenummer: PCT/EP2013/052677
(87) Internationale Veröffentlichungsnummer: WO 2013/120802

(56) Entgegenhaltungen:
- EP-A1- 2 080 913
- DE-A1-102007 058 114
- DE-A1-102007 061 820
- US-A- 5 617 338

## Beschreibung

Die Erfindung betrifft ein Verfahren zum Betreiben eines Unterdruckhandhabungssystems umfassend eine Unterdruckhandhabungsvorrichtung zur Handhabung eines Werkstücks sowie einen Unterdruckerzeuger. Die Erfindung betrifft außerdem einen Unterdruckerzeuger zur Durchführung des Verfahrens.

Zum Betreiben von Unterdruckhandhabungsvorrichtungen sind Unterdruckerzeuger verschiedener Art bekannt, z.B. sogenannte Ejektoren, welche mit Druckluft betrieben werden und Luft durch einen Sauganschluss ansaugen. Die Erzeugung des Unterdrucks erfolgt beispielsweise mittels einer Venturi-Düse. Außerdem sind elektrisch angetriebene Unterdruckerzeuger, z.B. Vakuumpumpen bekannte, welche in Abhängigkeit einer Eingangsgröße (z.B. Betriebsspannung und/oder - Strom) Unterdruck in einem Sauganschluss erzeugen.

Durch das Ansaugen im Sauganschluss wird eine Unterdruckversorgung für die Unterdruckhandhabungsvorrichtung bereitgestellt. Aus der DE 10 2007 061 820 A1, der DE 10 2007 058 114 A1 und der EP 2 080 913 A1 sind Unterdruckerzeuger mit integrierter Überwachungseinrichtung für den erzeugten Unterdruck bekannt. Dies ermöglicht es, den Druck im Sauganschluss zu erfassen und über ein elektrisches Signal das Über- und/oder Unterschreiten eines Schwellwertes anzuzeigen. Diese Signale können dazu eingesetzt werden, eine Luftsparautomatik oder eine Energiesparautomatik zu realisieren. Hierzu kann z.B. ein Ventil eines Ejektors nach Erreichen des Schwellwertes geschlossen werden und erst wieder eingeschaltet werden, wenn der Druck im Sauganschluss den Schwellwert wieder überschreitet (im Folgenden wird ein sich im Sauganschluss einstellender Unterdruck als Druck unterhalb des Umgebungsdrucks bezeichnet).

Eine derartige Überwachung und Energieoptimierung ist jedoch fehleranfällig. Ändert sich z.B. die Leistungsfähigkeit des Ejektors oder tritt eine Undichtigkeit bzw. eine Leckage im Ejektor oder in der angeschlossenen Unterdruckhandhabungsvorrichtung auf, so wird der genannte Schwellwert gegebenenfalls erst später oder nicht mehr erreicht. Die Energieeffizienz des Systems verschlechtert sich. Ferner kann es zu Betriebsausfällen kommen, z.B. wenn ein Werkstück aufgrund zu geringen Unterdrucks im Sauganschluss nicht mehr gehalten werden kann.

In der US 5617338 A ist ein Verfahren zum elektrischen Verarbeiten von Vakuumdruckinformationen für eine Vakuumeinheit beschreiben. Dabei werden Druckinformationen einer Mehrzahl von Sensoren aufgenommen und mit hinterlegten Schwellwerten verglichen.

Die Aufgabe der vorliegenden Erfindung besteht darin, bei Unterdruckhandhabungssystemen der genannten Art die Energieeffizienz zu erhöhen und die Zuverlässigkeit des Betriebs zu verbessern.

Diese Aufgabe wird durch ein Verfahren gemäß dem Anspruch 1, sowie durch einen Unterdruckerzeuger nach Anspruch 9 gelöst.

Das Verfahren ist zum Betrieb eines Handhabungssystems eingerichtet, welches eine Unterdruckhabungsvorrichtung, beispielsweise Unterdruckgreifvorrichtung oder Unterdruckspannvorrichtung zur Handhabung eines Werkstückes, sowie einen Unterdruckerzeuger zum Erzeugen von Unterdruck umfasst. Der Unterdruckerzeuger kann dazu ausgebildet sein, Unterdruck unter Verwendung von Druckluft zu erzeugen (beispielsweise Ejektor). Denkbar ist auch ein elektrischer Unterdruckerzeuger (z.B. elektrisch antreibbare Vakuumpumpe). Der Unterdruckerzeuger weist einen Sauganschluss auf, durch welchen Luft ansaugbar ist und so eine Unterdruckversorgung der Unterdruckhandhabungsvorrichtung bereitgestellt werden kann. Wird Unterdruck unter Verwendung von Druckluft erzeugt (z.B. Ejektor), so weist der Unterdruckerzeuger außerdem einen Druckanschluss zur Versorgung des Unterdruckerzeugers mit Druckluft auf. Zur Abführung der genutzten Versorgungsdruckluft und gegebenenfalls der angesaugten Luft ist dann gegebenenfalls ein Abluftterminal vorgesehen.

Gemäß dem Verfahren wird ein Diagnosezyklus durchgeführt, welcher die folgenden Schritte umfasst, insbesondere in der dargestellten Reihenfolge:
- Bereitstellen der Unterdruckversorgung für die Unterdruckhandhabungsvorrichtung (gegebenenfalls vorherige Aktivierung der Unterdruckversorgung) und freies Ansaugen, das heißt Ansaugen ohne dass ein Werkstück der Unterdruckhandhabungsvorrichtung zu seiner Handhabung zugeführt ist,
- Messung des sich in dem Sauganschluss einstellenden Gleichgewichtsdrucks bei Ansaugen ohne Werkstück mittels eines Saugdrucksensors.

Aus dem Ergebnis der Messung des Gleichgewichtsdrucks bei freiem Ansaugen können Rückschlüsse auf die Leistungsfähigkeit und die Strömungsqualität des Systems aus Unterdruckerzeuger und Handhabungsvorrichtung (ohne Werkstück) gezogen werden. Durch Kombination mit weiteren Informationen oder weiteren Messwerten, wie nachfolgend erläutert, kann gezielt auf Fehlerquellen im Unterdruckerzeuger oder in der Handhabungsvorrichtung geschlossen werden. Außerdem kann das Vorhandensein eines Werkstückes zuverlässig erkannt werden. Die Auswertung der gewonnenen Informationen ermöglicht es, den Unterdruckerzeuger und/oder das Handhabungssystem derart anzusteuern, dass eine unnötige Verschwendung von Antriebsenergie (z.B. Druckluftenergie oder elektrische Leistung) vermieden wird.

Das Ansaugen ohne Werkstück erfolgt vorzugsweise über eine Diagnosezeitdauer. Die Diagnosezeitdauer kann für den Diagnosezyklus vorgebbar sein, oder fest vorgegeben sein, z.B. in einer Steuereinrichtung des Unterdruckerzeugers hinterlegt sein. Die Diagnosezeitdauer ist insbesondere ausreichend lang gewählt, so dass sich ein zeitlich konstanter Gleichgewichtsdruck einstellen kann (insbesondere länger als eine Sekunde, beispielsweise mehrere Sekunden).

Nach Messung des Gleichgewichtsdrucks kann auch in dem Diagnosezyklus eine Handhabung eines Werkstückes erfolgen, wie weiter unten noch näher erläutert.

In dem Diagnosezyklus wird vorzugsweise ein den Gleichgewichtsdruck repräsentierendes Signal über eine Schnittstelle ausgegeben. Hierfür kann der Unterdruckerzeuger eine Kommunikationsschnittstelle aufweisen. Beispielsweise kann das Messsignal des Saugdrucksensors ausgegeben werden. Denkbar ist jedoch, dass aus dem gemessenen Gleichgewichtsdruck unter Verwendung weiterer ermittelter Messwerte und/oder Parameter des Systems ein "Performance-Wert" ermittelt wird und dieser über die Kommunikationsschnittstelle ausgegeben wird. Mittels der ausgegebenen Messsignale und/oder Performance-Werte kann eine energieeffiziente Ansteuerung des Unterdruckversorgers und eine Überwachung auf Betriebsfehler erfolgen.

Besonders vorteilhafte Ausgestaltungen des Verfahrens ergeben sich daraus, dass der Gleichgewichtsdruck und/oder der Performance-Wert mit wenigstens einer weiteren ermittelten Prozesskenngröße in Bezug gesetzt wird. Hieraus können dann Schlüsse auf die Leistungsfähigkeit des Handhabungssystems gezogen werden und gezielt auf Probleme in den einzelnen Bestandteilen geschlossen werden.

Das erfindungsgemäße Verfahren umfasst vorzugsweise auch Arbeitszyklen, welche aufeinanderfolgend durchgeführt werden, wobei ein Diagnosezyklus zwischen bestimmten, aufeinanderfolgenden Arbeitszyklen durchgeführt wird. Ein Diagnosezyklus kann beispielsweise nach einer bestimmten, vorgegebenen oder vorgebbaren Anzahl von Arbeitszyklen durchgeführt werden. Denkbar ist jedoch auch, dass die Durchführung eines Diagnosezyklus durch ein Diagnosestartsignal ausgelöst wird. Dieses Diagnosestartsignal kann dem Unterdruckerzeuger beispielsweise von einer externen Steuerung zugeführt werden. Hierzu kann der Unterdruckerzeuger wiederum eine Kommunikationsschnittstelle vorsehen.

Ein Arbeitszyklus für einen Unterdruckerzeuger beziehungsweise für ein Handhabungssystem der oben beschriebenen Art umfasst üblicherweise die nachfolgend erläuterten, aufeinanderfolgenden Arbeitsbereiche. In einem ersten Arbeitsbereich erfolgt ggf. Aktivierung der Unterdruckversorgung, Bereitstellung der Unterdruckversorgung und Ansaugen eines Werkstückes, wobei der Unterdruck im Sauganschluss vom Umgebungsdruck zu einem Haltewert (H1) abfällt. Der Haltewert H1 ist z.B. so gewählt, dass ein sicheres Handhaben des Werkstückes möglich ist. Gegebenenfalls kann in einem zweiten Arbeitsbereich die Unterdruckversorgung derart geregelt werden, dass der in dem Sauganschluss messbare Druck zwischen dem Haltewert (H1) und einem Regelhaltewert (H1+h1) liegt. Beispielsweise kann der Unterdruck zwischen dem Haltewert (H1) und dem Regelhaltewert (H1+h1) wenigstens einmal geregelt werden. Hierbei kann die Unterdruckversorgung deaktiviert werden, wenn der in dem Sauganschluss gemessene Druck auf dem Haltewert (H1) abgesunken ist, oder unter diesen abgesunken ist. Die Unterdruckversorgung wird z.B. dann wieder aktiviert, wenn nach Deaktivierung der in dem Sauganschluss gemessene Druck wieder auf den Regelhaltewert (H1+h1) angestiegen ist. Der Arbeitszyklus umfasst schließlich einen weiteren Arbeitsbereich (dritter Arbeitsbereich), in welchem der in dem Sauganschluss gemessene Unterdruck wieder auf den Umgebungsdruck ansteigt, um das Werkstück loszulassen. Um ein Ablösen des Werkstückes von der Handhabungsvorrichtung zu gewährleisten, kann nach einer vorteilhaften Ausgestaltung des Arbeitszyklus der Druck in dem Sauganschluss über den Umgebungsdruck hinaus auf einen Abblasdruck ansteigen (vierter Arbeitsbereich). Dies kann über eine Abblaszeitdauer geschehen.

Während des ersten Arbeitsbereiches des Arbeitszyklus erfolgt vorzugsweise eine Messung des Drucks im Sauganschluss mittels des Saugdrucksensors. Um zu erkennen, ob ein Werkstück zugeführt wurde, kann ein Kontrollschwellwert (H2) oder ein Kontrolldruckintervall (definiert durch den Kontrollschwert H2 und einen Offsetwert h2 oberhalb des Kontrollschwellwerts) vorgegeben sein. Durch Vergleich des Drucks im Sauganschluss mit dem Kontrollschwellwert (H2) kann ermittelt werden, ob ein Werkstück zugeführt ist. Fällt der Druck im Sauganschluss unter den Kontrollschwellwert (H2) ab oder liegt er in dem Kontrolldruckintervall ([H2, H2+h2]), so kann darauf geschlossen werden, dass ein Werkstück an der Handhabungsvorrichtung anliegt und sich ein Unterdruck im Sauganschluss aufbaut.

Auch in einem Diagnosezyklus ist nach Messung des Gleichgewichtsdrucks noch die Handhabung eines Werkstücks möglich. Hierbei fällt in einem ersten Bereich der Unterdruck von dem Gleichgewichtsdruck zu dem genannten Haltewert (H1) ab. Hieran können sich dann die weiteren Arbeitsbereiche wie bereits zum Arbeitszyklus erläutert, anschließen (d.h. gegebenenfalls Regelung in einem zweiten Arbeitsbereich zum Halten des Werkstückes, Anstieg des Unterdrucks auf den Umgebungsdruck in einem weiteren Arbeitsbereich, um das Werkstück loszulassen, gegebenenfalls Aufbauen eines Abblasdruckes über eine Abblaszeitdauer, um ein Ablösen des Werkstückes von der Handhabungsvorrichtung zu gewährleisten).

Eine zuverlässige Diagnose kann auch dadurch erzielt werden, dass (z.B. durch ein Diagnosesignal ausgelöst) mehrere Diagnosezyklen unmittelbar aufeinanderfolgend durchgeführt werden. Unterscheiden sich die in den verschiedenen Diagnosezyklen ermittelten Gleichgewichtsdrucke voneinander, so kann dies auf eine Funktionsstörung oder eine Undichtigkeit des Systems hinweisen.

Vorteilhaft kann es außerdem sein, wenn im Betrieb des Handhabungssystems zu vorgegebenen Zeitpunkten oder in regelmäßigen Abständen oder jeweils nach einer vorgegebenen Anzahl von Arbeitszyklen, je ein oder eine bestimmte Anzahl von Diagnosezyklen durchgeführt werden, wobei die in den Diagnosezyklen ermittelten Werte (Gleichgewichtsdruck oder weitere Messwerte wie unten erläutert) in einer Steuereinrichtung hinterlegt werden. Aus einer Streuung, systematischen Veränderung und/oder der zeitlichen Entwicklung der ermittelten Werte (insbesondere Gleichgewichtsdruck) kann auf Veränderungen im Handhabungssystem rückgeschlossen werden. Zeigen die nacheinander ermittelten Werte für den Gleichgewichtsdruck beispielsweise eine ansteigende Tendenz, so weist dies auf eine sich verstärkende Leckage des Systems oder verschlechterte Effizienz hin. Eine Überwachung des zeitlichen Verlaufs der in den Diagnosezyklen ermittelten Werte (insbesondere Gleichgewichtsdruck) ermöglicht daher eine vorausschauende Wartung des Systems.

Eine vorteilhafte Ausgestaltung des Verfahrens besteht somit darin, dass ein erster und, gegebenenfalls nach Durchführung einer oder mehrerer Arbeitszyklen, ein weiterer Diagnosezyklus durchgeführt wird, wobei in dem ersten und in dem weiteren Diagnosezyklus ein erster und ein weiterer Gleichgewichtsdruck ermittelt wird. Daraufhin erfolgt ein Vergleich des ersten und des weiteren gemessenen Gleichgewichtsdrucks.

Nach einem weiteren Aspekt der Erfindung wird bei dem Verfahren, beispielsweise vor oder nach einem Diagnosezyklus oder Arbeitszyklus, ein Charakterisierungszyklus durchgeführt. Dieser zeichnet sich durch die folgenden Schritte aus (insbesondere in der folgenden Reihenfolge):
- Verbinden des Sauganschlusses des Unterdruckerzeugers mit einer Kalibriersaugöffnung des Unterdruckerzeugers,
- Bereitstellen von Unterdruck in dem Sauganschluss und Ansaugen durch die Kalibriersaugöffnung,
- Messung des sich in dem Sauganschluss einstellenden Kalibrierdrucks, z.B. mittels des Saugdrucksensors.

Vorzugsweise ist für den Charakterisierungszyklus der Sauganschluss ausschließlich mit der Kalibriersaugöffnung verbunden und insbesondere gegenüber der Unterdruckhandhabungsvorrichtung abgeschlossen. Das Ansaugen durch die Kalibriersaugöffnung erfolgt vorzugsweise über eine vorgebbare oder vorgegebene Kalibriersaugdauer (tK). Der Kalibrierdruck ist insofern ein sich einstellender Gleichgewichtsdruck bei Ansaugen durch die Kalibrieröffnung.

Durch die Messung in einem Charakterisierungszyklus kann z.B. eine Verstopfung oder Verschmutzung innerhalb des Unterdruckerzeugers (z.B. in der Venturi-Düse eines Ejektors) gezielt festgestellt werden. In Zusammenschau mit dem in einem Diagnosezyklus gemessenen Gleichgewichtsdruck kann daher die Leistungsfähigkeit des Handhabungssystems zuverlässig überwacht werden und eine etwaige Fehlerquelle lokalisiert werden.

Die Kalibriersaugöffnung kann z.B. als Saugdüse ausgebildet sein, welche z.B. einen bekannten Strömungswiderstand aufweist. Die Verbindung des Sauganschlusses mit der Kalibriersaugöffnung erfolgt vorzugsweise mittels eines steuerbaren Kalibrierventils, mit dem der Sauganschluss z.B. wahlweise mit der Unterdruckhandhabungsvorrichtung oder mit der Kalibriersaugöffnung strömungsverbunden werden kann.

Ähnlich wie zu den Arbeitszyklen erläutert, werden Charakterisierungszyklen vorzugsweise zu vorgegebenen Zeitpunkten oder in regelmäßigen Abständen oder jeweils nach einer vorgegebenen Anzahl von Arbeitszyklen und/oder Diagnosezyklen durchgeführt. Vorzugsweise kann über die Kommunikationsschnittelle ein den Kalibrierdruck repräsentierendes Signal ausgegeben werden. Die in den Charakterisierungszyklen ermittelten Werte des Kalibrierdrucks werden vorzugsweise in einer Steuereinrichtung des Handhabungssystems hinterlegt.

Zur weiteren Ausgestaltung wird in einem Arbeitszyklus (insbesondere vor oder nach Durchführung des Diagnosezyklus und/oder vor oder nach Durchführung eines Charakterisierungszyklus) mittels einer Zeitmesseinrichtung eine erste Druckabfallzeitdauer gemessen, über welche der Unterdruck im Sauganschluss ausgehend vom Umgebungsdruck auf einen Kontrollschwellwert (H2) abfällt. Zusätzlich oder alternativ kann mit der Zeitmessenrichtung eine zweite Druckabfallzeitdauer gemessen werden, über welche der Unterdruck im Sauganschluss von dem Kontrollschwellwert (H2) auf einen Haltewert (H1) abfällt. Der Kontrollschwellwert (H2) ist vorzugsweise derart gewählt, dass ein Absinken des Druckes im Sauganschluss auf den Kontrollschwellwert (H2) einen Hinweis darauf geben kann, wenn ein Werkstück der Handhabungsvorrichtung zugeführt ist, beispielsweise an einem Sauggreifer anliegt. Der Haltewert H1 ist insbesondere so gewählt, dass eine sichere Handhabung des Werkstückes möglich ist.

Aus den gemessenen Druckabfallzeitdauern kann gegebenenfalls unter Verwendung des Gleichgewichtsdrucks ein Rückschluss auf die Dichtheit sowie auf die Leistungsfähigkeit des kombinierten Systems aus Unterdruckerzeuger, Handhabungsvorrichtung und gegebenenfalls Werkstück gezogen werden.

Selbstverständlich können die Druckabfallzeitdauern, insbesondere die zweite Druckabfallzeitdauer, auch während eines Diagnosezyklus gemessen werden. Bei ordnungsgemäßem Betrieb des Systems liegt der Kontrollschwellwert (H2) stets unter dem Gleichgewichtsdruck bei freiem Ansaugen.

Zur weiteren Ausgestaltung des Verfahrens wird die Druckstabilität des Systems bei gehaltenem Werkstück, insbesondere im Bereich zwischen dem Haltewert (H1) und dem Regelhaltewert (H1+h1) bestimmt. Hierzu kann in einem Diagnosezyklus und/oder in einem Arbeitszyklus die Unterdruckversorgung deaktiviert werden, nachdem der in dem Sauganschluss gemessene Druck auf den Haltewert (H1) abgesunken ist oder unter diesen abgesunken ist. Nach Deaktivierung der Unterdruckversorgung kann dann eine Druckänderungsrate, Leckagerate und/oder der Zeitverlauf des im Sauganschluss herrschenden Druckes gemessen werden. Aus den Messergebnissen können Rückschlüsse auf die Dichtheit des Gesamtsystems aus Unterdruckerzeuger, Handhabungsvorrichtung und Werkstück gezogen werden. In Verbindung mit dem ermittelten Gleichgewichtsdruck kann so beispielsweise die Dichtheit und Leistungsfähigkeit der Handhabungsvorrichtung und/oder des Unterdruckerzeugers überwacht werden.

Nach einem weiteren Aspekt der Erfindung wird der ermittelte Gleichgewichtsdruck mit einem vorgegebenen oder vorgebbaren, zwischen dem Umgebungsdruck und dem Haltewert (H1) liegenden Kontrollschwert (H2) verglichen. Vorzugsweise wird ein Warnsignal ausgegeben oder ausgelöst (beispielsweise von einer Steuereinrichtung des Unterdruckerzeugers), wenn der Gleichgewichtsdruck unterhalb des Kontrollschwellwertes (H2) liegt.

Wie erläutert, dient der Kontrollschwellwert (H2) dazu, durch Messung des Unterdrucks im Sauganschluss festzustellen, ob ein Werkstück der Handhabungsvorrichtung zugeführt ist und sich aufgrund des anliegenden Werkstückes ein Unterdruck aufbauen kann. In dem beschriebenen Fehlerfall herrscht im Sauganschluss bereits ohne anliegendes Werkstück ein signifikanter Unterdruck (das heißt der im Sauganschluss gemessene Druck ist unter den Kontrollschwellwert (H2) abgesunken). Eine Anwesenheitskontrolle eines Werkstücks durch Unterdruckmessung im Sauganschluss ist dann nicht mehr möglich.

Denkbar ist auch, dass das Verhältnis von Gleichgewichtsdruck und Kontrollschwellwert (H2) ermittelt wird. Hieraus kann ein Performance-Wert ermittelt werden und beispielsweise über eine Kommunikationsschnittstelle ausgegeben werden. Vorzugsweise erfolgt die Ausgabe eines prozentualen Wertes, wobei null Prozent Performance einer Situation entspricht, bei der der Kontrollschwellwert (H2) gleich dem Gleichgewichtspunkt ist, und einhundert Prozent Performance einer Situation entspricht, bei der der Gleichgewichtsdruck gleich dem Umgebungsdruck ist.

Der Kontrollschwellwert (H2) ist so gewählt, dass bei ordnungsgemäßem Betrieb des Systems aus Unterdruckerzeuger und Handhabungsvorrichtung der im Sauganschluss herrschende Druck nur dann unter den Kontrollschwellwert abfällt, wenn ein Werkstück der Handhabungsvorrichtung zugeführt ist. Der Kontrollschwellwert (H2) ist außerdem so gewählt, dass bei ordnungsgemäßem Betrieb der im Sauganschluss gemessene Druck oberhalb des Kontrollschwellwertes liegt, wenn kein Werkstück angesaugt wird.

Durch die erfindungsgemäße Bestimmung des Gleichgewichtsdrucks kann vermieden werden, dass bei geringerer Leistungsfähigkeit, beispielsweise bei Verschmutzung oder Leckage im Unterdruckerzeuger, fehlerhaft auf das Vorhandensein eines Werkstücks geschlossen wird, wenn der im Sauganschluss messbare Gleichgewichtsdruck aufgrund der genannten Probleme unterhalb des Kontrollschwellwertes liegt. Durch die genannten Maßnahmen kann daher zuverlässiger kontrolliert werden, ob ein Werkstück vorhanden ist.

Eine besonders bevorzugte Ausgestaltung des Verfahrens besteht darin, dass in einem Arbeitszyklus und/oder in einem Diagnosezyklus nach Aufnahme (und Handhabung) des Werkstückes der Druck im Sauganschluss auf einen oberhalb des Umgebungsdrucks liegenden Abblasdruck ansteigt. Insbesondere findet über eine Abblaszeitdauer ein Anstieg des Druckes im Sauganschluss vom Umgebungsdruck bis zu dem Abblasdruck und ein Wiederabsinken auf den Umgebungsdruck statt. Dabei wird der Abblasdruck und/oder die Abblaszeitdauer vorzugsweise in Abhängigkeit des Gleichgewichtsdrucks bestimmt. Vorzugsweise wird die Abblaszeitdauer derart in Abhängigkeit des ermittelten Gleichgewichtsdrucks gewählt, dass bei hohem Gleichgewichtsdruck eine längere Abblaszeitdauer als bei einem niedrigeren Gleichgewichtsdruck festgelegt wird.

Wird Druckluft durch den Sauganschluss ausgeblasen, so entfällt ein Teil des Druckes auf den Strömungswiderstand der Anordnung aus Unterdruckerzeuger und Handhabungsvorrichtung. Dieser Einfluss kann durch die Messung des Gleichgewichtsdrucks im Diagnosezyklus erfasst werden. Der Abblasdruck kann dann gerade so groß gewählt werden und/oder die Abblaszeitdauer kann so lange gewählt werden, dass trotz des Strömungswiderstands des Systems aus Unterdruckerzeuger und Handhabungsvorrichtung ein zuverlässiges Abblasen des Werkstückes gewährleistet ist. Dabei kann der erforderliche Druck um einen Sicherheitsoffset (beispielsweise 10 mbar) erhöht werden.

Durch die genannten Maßnahmen kann der Abblasvorgang kurzgehalten werden und mit geringem Überdruck durchgeführt werden. Dabei wird dennoch ein zuverlässiges Ablösen des Werkstückes sichergestellt. Der Abblasimpuls kann daher so eingestellt werden, dass keine unnötige Druckluftenergie verschwendet wird und dennoch ein sicheres Ablösen gewährleistet ist.

Der Unterdruckerzeuger kann wie erläutert derart ausgebildet sein, dass Unterdruck unter Verwendung von Druckluft erzeugbar ist (z.B. Ejektor). Zur weiteren Ausgestaltung kann der Druck im Druckanschluss dieses Unterdruckerzeugers mittels eines Versorgungsdrucksensors gemessen werden. Dies erfolgt insbesondere gleichzeitig mit der Messung des Gleichgewichtsdrucks im Sauganschluss. Denkbar ist jedoch auch, dass der Druck im Druckanschluss vor und/oder während und/oder nach dem Ansaugen ohne Werkstück gemessen wird. Durch die Druckmessung im Druckanschluss kann der Wirkungsgrad des Systems festgestellt werden. Außerdem kann eine Kennlinie aufgezeichnet werden, die zumindest abschnittsweise die Abhängigkeit des Druckes im Sauganschluss von dem Druck im Druckanschluss wiedergibt.

Zur weiteren Ausgestaltung kann der Volumenstrom durch den Druckanschluss gemessen werden.

Findet z.B. eine Vakuumpumpe oder ein sonstiger, elektrisch antreibbarer Unterdruckerzeiger Verwendung, so kann als zusätzliche Information die Eingangsleistung, Eingangsspannung bzw. Versorgungsspannung und/oder der Eingangsstrom bzw. Versorgungsstrom gemessen werden.

Grundsätzlich können anstelle oder zusätzlich zu dem Druck im Druckanschluss auch andere Eingangsgrößen des Unterdruckerzeugers gemessen werden und zur Ermittlung der Leistungsfähigkeit und Dichtheit des Systems herangezogen werden. Denkbar ist beispielsweise, dass die Drehzahl einer Pumpe oder die Versorgungsspannung eines Elektromotors als Eingangsgröße berücksichtigt werden.

Zur Lösung der eingangs gestellten Aufgabe wird außerdem ein Unterdruckerzeuger vorgeschlagen, z.B. Ejektor oder elektrischer Unterdruckerzeuger. Dieser weist einen Sauganschluss zum Ansaugen auf, um eine Unterdruckversorgung für eine Unterdruckhandhabungsvorrichtung bereitzustellen. Der Unterdruckerzeuger weist insbesondere einen Saugdrucksensor zur Messung des Druckes im Sauganschluss, und vorzugsweise eine Kommunikationsschnittstelle zur Übertragung von Messwerten des Saugdrucksensors auf.

Der Unterdruckerzeuger kann insbesondere ein steuerbares Kalibrierventil aufweisen, welches vorzugsweise im Strömungsverlauf beim Ansaugen dem Sauganschluss nachgeschaltet ist. Mit dem Kalibrierventil kann der Sauganschluss mit einem Betriebsausgang für eine Unterdruckhandhabungsvorrichtung, oder mit einer Kalibriersaugöffnung des Unterdruckerzeugers strömungsverbunden und druckverbunden werden. Durch Änderung der Ventilstellung kann so ein Diagnosezyklus mit freiem Ansaugen, ein Arbeitszyklus mit Ansaugen eines Werkstücks oder ein Charakterisierungszyklus mit Ansaugen durch die Kalibriersaugöffnung durchgeführt werden.

Der Unterdruckerzeuger kann als Ejektor ausgebildet sein, und einen Druckanschluss zur Versorgung des Unterdruckerzeugers mit Druckluft aufweisen. Vorteilhafterweise ist ein Versorgungsdrucksensor zur Messung des Druckes im Druckanschluss vorgesehen. Ferner kann ein Abluftterminal vorgesehen sein, durch welches die gebrauchte Druckluft, sowie die durch den Sauganschluss angesaugte Luft abgeführt werden kann.

Zusätzlich oder alternativ zum Drucksensor im Druckanschluss können auch Sensoren für weitere Eingangsgrößen des Unterdruckerzeugers vorgesehen sein (beispielsweise Drehzahlsensoren für eine Pumpe, Spannungsmesser zur Messung der Versorgungsspannung eines Elektromotors, und so weiter).

Zur weiteren Ausgestaltung hat der Unterdruckerzeuger eine Zeitmesseinrichtung, welche derart mit dem Saugdrucksensor und/oder dem Versorgungsdrucksensor zusammenwirkt, dass eine erste und/oder zweite Druckabfallzeitdauer wie oben erläutert gemessen werden kann.

Der Unterdruckerzeuger weist vorzugsweise ein Saugventil auf, mittels welchem das Ansaugen durch den Sauganschluss aktivierbar und deaktivierbar ist. So kann die Unterdruckversorgung für die Unterdruckhandhabungsvorrichtung aktiviert und deaktiviert werden.

Zur weiteren Ausgestaltung ist der Druckanschluss derart über ein Abblasventil mit dem Sauganschluss verbunden, das in dem Sauganschluss ein (über dem Umgebungsdruck liegender) Abblasdruck über eine vorgebbare Abblaszeitdauer erzeugbar ist.

Darüber hinaus ist vorzugsweise eine Steuer- und/oder Regeleinrichtung vorgesehen, welche derart ausgebildet ist, dass das Kalibrierventil steuerbar ist, insbesondere zwischen einer Betriebsschaltstellung (in welcher der Sauganschluss mit dem Betriebsausgang für eine Unterdruckhandhabungsvorrichtung verbunden ist) und einer Kalibrierschaltstellung (in welcher der Sauganschluss mit der Kalibriersaugöffnung verbunden ist) schaltbar ist.

Die Steuer- und/oder Regeleinrichtung ist vorzugsweise auch dazu ausgebildet, das Saugventil und/oder das Abblasventil in Abhängigkeit des in einem Diagnosezyklus ermittelten Gleichgewichtsdrucks und/oder der mit dem Saugdrucksensor und/oder dem Versorgungsdrucksensor und/oder gegebenenfalls mit der Zeitmesseinrichtung gemessenen Werte anzusteuern. Insbesondere ist die Steuereinrichtung derart ausgebildet, dass die Sensoren und ggf. die Ventile zur Durchführung des erfindungsgemäßen Verfahrens angesteuert werden können.

Der erfindungsgemäße Unterdruckerzeuger kann als kompakte Baueinheit ("Kompakt-Ejektor") realisiert werden. Dies ermöglicht es, den Unterdruckerzeuger auch in bestehende Systeme zu integrieren und so für bestehende Systeme die Energieeffizienz und die Zuverlässigkeit zu erhöhen.

Weitere Einzelheiten und vorteilhafte Ausgestaltungen der Erfindung sind der nachfolgenden Beschreibung zu entnehmen, anhand derer die in den Figuren dargestellten Ausführungsformen der Erfindung näher beschrieben und erläutert sind.

### Es zeigen:

Figur 1A schematische Darstellung einer ersten Ausführungsform eines erfindungsgemäßen Unterdruckerzeugers und Handhabungssystems;
Figur 1B schematische Darstellung einer weiteren Ausführungsform eines erfindungsgemäßen Unterdruckerzeugers und Handhabungssystems;
Figur 2 schematische Darstellung zur Erläuterung eines Arbeitszyklus;
Figur 3 schematische Darstellung zur Erläuterung eines Diagnosezyklus;
Figur 4 schematische Darstellung zur Erläuterung eines Fehlerfalles;
Figur 5 schematische Darstellung zur Erläuterung eines energieoptimierten Abblasvorgangs.

Zur besseren Übersichtlichkeit werden in der nachfolgenden Beschreibung sowie in den Figuren für gleiche oder einander entsprechende Merkmale dieselben Bezugszeichen verwendet.

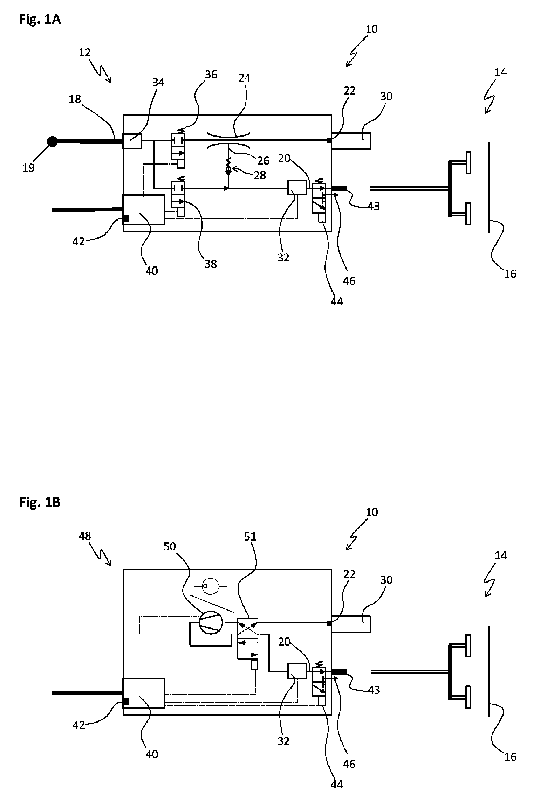

Die Figur 1A zeigt ein Handhabungssystem 10, umfassend einen als Kompakt-Ejektor ausgestalteten Unterdruckerzeuger 12 und eine im Beispiel als Sauggreifer ausgebildete Unterdruckhandhabungsvorrichtung 14. Ebenfalls angedeutet ist ein Werkstück 16, welches mit der Unterdruckhandhabungsvorrichtung 14 durch Ansaugen aufgenommen werden kann.

Der Unterdruckerzeuger 12 weist einen Druckanschluss 18 auf, welches mit einer Druckluftversorgung 19 in Strömungsverbindung steht, so dass der Unterdruckerzeuger 12 mit Druckluft versorgt werden kann. Außerdem ist ein Sauganschluss 20 vorgesehen, durch welches Luft oder ein anderes gasförmiges Medium ansaugbar ist, so dass eine Unterdruckversorgung für die Unterdruckhandhabungsvorrichtung 14 bereitgestellt werden kann. Ferner ist ein Abluftterminal 22 vorgesehen.

Die Sauwirkung wird mittels Druckluft in an sich bekannter Weise dadurch erzeugt, dass Druckluft ausgehend vom Druckanschluss 18 durch eine Venturi-Düse 24 zu dem Abluftterminal 22 strömt. Ein Sauganschluss 26 der Venturi-Düse 24 steht über ein Rückschlagventil 28 mit dem Sauganschluss 20 in Strömungsverbindung. Durch das Abluftterminal 22 kann einerseits die durch die Venturi-Düse 24 geströmte Druckluft, andererseits die durch den Sauganschluss 20 angesaugte Luft abgeführt werden. Dem Abluftterminal 22 kann ein Schalldämpfer 30 nachgeordnet sein, so dass im Betrieb des Systems Strömungslärm reduziert wird.

Zur Messung des Drucks im Sauganschluss 20 ist ein Saugdrucksensor 32 vorgesehen. Der Druck im Druckanschluss 18 kann über einen Versorgungsdrucksensor 34 gemessen werden.

Der Unterdruckerzeuger 12 weist außerdem ein Saugventil 36 auf, mittels welchem ein Ansaugen durch den Sauganschluss 20 aktivierbar und deaktivierbar ist. Im dargestellten Beispiel ist das Saugventil als ein 2-Wegeventil ausgebildet, welches im Strömungsgang zwischen dem Druckanschluss 18 und der Venturi-Düse 24 angeordnet ist. In seiner geöffneten Stellung wird die Venturi-Düse 24 von Druckluft durchströmt und erzielt eine Saugwirkung im Sauganschluss 20. In der geschlossenen Stellung des Saugventils 36 ist die Venturi-Düse 24 von dem Druckanschluss 18 getrennt und die Unterdruckversorgung ist deaktiviert.

Der Unterdruckerzeuger 12 weist außerdem ein Abblasventil 38 auf. Dieses ist derart angeordnet, dass zwischen dem Druckanschluss 18 und dem Sauganschluss 20 eine Verbindung über das Abblasventil 38 herstellbar und trennbar ist. Dies ermöglicht es, dem Sauganschluss 20 kontrolliert Druck aus dem Druckanschluss 18 zuzuführen, und so einen Abblasimpuls zu realisieren. Im Beispiel ist das Abblasventil 38 ebenfalls als 2-Wegeventil ausgebildet.

Für das Saugventil 36 und das Abblasventil 38 sind auch andere Ausgestaltungen und andere Anordnungen im Strömungsgang möglich. So kann beispielsweise das Saugventil 36 auch zwischen dem Sauganschluss der Venturi-Düse 24 und dem Sauganschluss 20 angeordnet sein.

Der Unterdruckerzeuger 12 umfasst außerdem eine Steuereinrichtung 40, welcher die Messsignale des Saugdrucksensors 32 und des Versorgungsdrucksensors 34 zuführbar sind. Ferner steuert die Steuereinrichtung 40 die Ventile 36 und 38 an. Die Steuereinrichtung 40 kann außerdem eine nicht näher dargestellte Zeitmesseinrichtung aufweisen, mittels welcher die verstrichene Zeit zwischen vorgebbaren Messwerten der Sensoren 32 und 34 messbar sind.

Die Steuereinrichtung 40 ist dazu ausgebildet, die Ventile 36 und 38 sowie die Sensoren 34 und 32 zur Realisierung der erfindungsgemäßen Betriebsverfahren anzusteuern.

Der Steuereinrichtung 40 können weitere Eingangsgrößen des Unterdruckerzeugers 12 zugeführt werden, beispielsweise eine Versorgungsspannung eines Elektromotors oder eine Drehzahl einer Pumpe. Ferner stellt die Steuereinrichtung 40 eine Kommunikationsschnittstelle 42 bereit, über welche Messwerte beispielsweise an eine externe Zentraleinheit übermittelt werden können.

Der Unterdruckerzeuger 12 weist ferner ein steuerbares Kalibrierventil 44 auf. Dieses ist im dargestellten Beispiel als Wegeventil ausgebildet, welches wahlweise eine Betriebsschaltstellung und eine Kalibrierschaltstellung einnehmen kann. In der Betriebsschaltstellung ist der Sauganschluss 20 mit dem Betriebsausgang 43 für die Unterdruckhandhabungsvorrichtung 14 verbunden, in der Kalibrierschaltstellung mit einer insbesondere als Saugdüse (mit bekannten Strömungswiderstand oder Strömungseigenschaften) ausgebildeten Kalibriersaugöffnung 44 des Unterdruckerzeugers 12. Das Kalibrierventil 44 ist vorzugsweise zur Einnahme der Betriebsschaltstellung vorgespannt, d.h. es nimmt ohne aktive Ansteuerung die Betriebsschaltstellung ein.

Die Steuereinrichtung 40 ist insbesondere zur Ansteuerung des Kalibrierventils 44 ausgebildet. Wird das Kalibrierventil 44 in seine Kalibrierschaltstellung geschaltet, so kann mittels des Saugdrucksensors 32 ein Kalibrierdrucks (pK) als der sich einstellende Gleichgewichtsdruck gemessen werden, wenn durch den Sauganschluss 20 und die Kalibriersaugöffnung 46 angesaugt wird.

Die Figur 1B zeigt einen Unterdruckerzeuger 48, welcher einen elektrischen Vakuumerzeuger 50 aufweist. Dieser weist ein Ansaug- und ein Ausblasterminal auf, welche mit einem (im dargestellten Beispiel als 4/2-Wegeventil ausgebildeten) Steuerventil 51 verbunden sind. Das Steuerventil 51 kann eine Saugschaltstellung und eine Ausblasschaltstellung einnehmen, wobei in der Saugschaltstellung ein Ansaugen durch den Sauganschluss 20 erfolgen kann, in der Ausblasschaltstellung ein Abblasdruck im Sauganschluss 20 erzielt werden kann. Insofern vereinigt das Steuerventil 51 die Funktionen von Saugventil 36 und Abblasventil 38 im Sinne der Figur 1A.

Die Steuereinrichtung 40 des Unterdruckerzeugers ist insbesondere auch zur Ansteuerung des Steuerventils 51 und vorzugsweise zur Ansteuerung des elektrischen Vakuumerzeugers 50 ausgebildet. Hinsichtlich der weiteren Merkmale und Funktionen des Unterdruckerzeugers 40 wird auf die Beschreibung zu Figur 1A verwiesen.

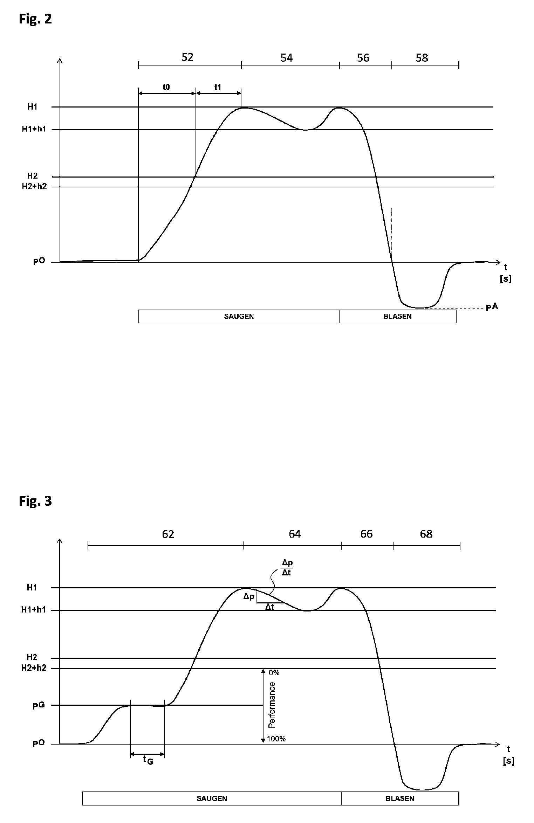

Anhand von Figur 2 wird ein Arbeitszyklus beschrieben, wie er mit dem Handhabungssystem 10 durchgeführt werden kann. In dem dargestellten Diagramm ist auf der Ordinate nach oben ein in dem Sauganschluss 20 herrschender Unterdruck unter dem Umgebungsdruck p0 aufgetragen. Positive Y-Werte entsprechen daher einem den Umgebungsdruck p0 unterschreitenden Druck. Die Abszisse stellt den Zeitverlauf dar. Ein Arbeitszyklus zeichnet sich im dargestellten Beispiel dadurch aus, dass der Druck ausgehend vom Umgebungsdruck eine zeitliche Variation aufweist und wieder zum Umgebungsdruck zurückkehrt.

Im dargestellten Beispiel ist der Arbeitszyklus in vier Arbeitsbereiche 52, 54, 56, 58 unterteilt. Im ersten Arbeitsbereich 52 erfolgt eine Aktivierung der Unterdruckversorgung (z.B. Öffnen des Saugventils 36 bei geschlossenem Abblasventil 38). Dadurch wird eine Saugwirkung in dem Sauganschluss 20 erzielt und eine Unterdruckversorgung für die angeschlossene Unterdruckhandhabungsvorrichtung 14 bereitgestellt. Das Werkstück 16 kann daher angesaugt werden.

Durch die Saugwirkung fällt der mit dem Saugdrucksensor 32 gemessene Druck im Sauganschluss 20 ab, d.h. in der Darstellung der Figur 2 steigt der Unterdruck an. Liegt das Werkstück 16 an der Unterdruckhandhabungsvorrichtung 14 an, so kann der Druck im Sauganschluss unter einen Kontrollschwellwert H2 abfallen. Insofern zeigt ein Abfallen des Drucks im Sauganschluss unter dem Kontrollschwellwert H2 an, dass ein Bauteil gegriffen wurde.

Die Zeitdauer, über welche der in dem Sauganschluss 20 gemessene Druck ausgehend vom Umgebungsdruck p0 unter den Kontrollschwellwert H2 abfällt, ist in Figur 2 mit t0 bezeichnet. Diese erste Druckabfallzeitdauer t0 kann vorzugsweise über eine Zeitmesseinrichtung (z.B. in der Steuereinrichtung 40 integriert) gemessen werden. Nach Überschreiten des Kontrollschwellwerts H2 fällt bei anliegendem Werkstück 16 der Druck im Sauganschluss weiter ab, bis ein Haltewert H1 erreicht wird. Dieser Haltewert ist vorzugsweise so gewählt, dass eine sichere Handhabung des Werkstücks 16 mit der Unterdruckhandhabungsvorrichtung 14 möglich ist.

Die Zeitdauer, über welche der Druck ausgehend von dem Kontrollschwellwert H2 zu dem Haltewert H1 abfällt (d.h. der Unterdruck ansteigt), kann wiederum vorzugsweise mit einer Zeitmesseinrichtung (beispielsweise in der Steuereinrichtung 40) gemessen werden. Diese zweite Druckabfallzeitdauer ist in Figur 2 mit t1 bezeichnet.

Der Kontrollschwellwert H2 kann z.B. 500 mbar unterhalb des Umgebungsdrucks p0 gewählt werden. Der Haltewert H1 kann beispielsweise 700 mbar unterhalb des Umgebungsdrucks p0 gewählt werden. Der Umgebungsdruck p0 liegt z.B. im Bereich des Standarddrucks 1013 mbar.

An den ersten Arbeitsbereich 52 schließt sich ein zweiter Arbeitsbereich 54 an. In diesem wird bei gegriffenem Werkstück 16 die Unterdruckversorgung derart geregelt, dass der Druck im Sauganschluss 20 zwischen dem Haltewert H1 und einem Regelhaltewert H1+h1 liegt. Hierzu kann beispielsweise nach Erreichen des Haltewerts H1 die Unterdruckversorgung wie erläutert deaktiviert werden. Steigt dann aufgrund von Leckage der Druck im Sauganschluss 20 wieder über einen Haltewert H1+h1 an, so kann die Unterdruckversorgung wieder aktiviert werden, um ein zuverlässiges Handhabungswerkstück 16 zu gewährleisten.

In einem dritten Arbeitsbereich 56 steigt der in dem Sauganschluss 20 gemessene Druck wieder auf den Umgebungsdruck p0 an, um das Werkstück 16 loszulassen. Dies kann aufgrund von Leckage nach Deaktivierung der Unterdruckversorgung geschehen, oder durch gezielte Druckbeaufschlagung des Sauganschlusses 20 erfolgen. Beispielsweise kann zum Loslassen des Werkstücks 16 das Saugventil 36 geschlossen werden, und das Abblasventil 38 in kontrollierter Weise geöffnet werden.

Vorzugsweise erfolgt über einen vierten Arbeitsbereich 58 ein gezieltes Abblasen des Werkstückes. Hierbei wird der Druck im Sauganschluss 20 gezielt auf einen oberhalb des Umgebungsdrucks p0 liegenden Abblasdruck pA erhöht. Dies erfolgt beispielsweise bei geschlossenem Saugventil 36 durch gezieltes Öffnen des Abblasventils 38.

In Figur 3 ist ein Diagnosezyklus beschrieben. Dieser ist beispielsweise in einem ersten, zweiten, dritten und vierten Diagnosebereich 62, 64, 66 und 68 unterteilt, wobei sich anstelle der Diagnosebereiche 64 bis 68 auch Druckverläufe wie in den Arbeitsbereichen 54 bis 58 an den ersten Diagnosebereich 62 anschließen können.

Im ersten Diagnosebereich 62 erfolgt eine Aktivierung der Unterdruckversorgung für die Handhabungsvorrichtung, wobei diese in einen Zustand des freien Ansaugens versetzt wird, das heißt ein Ansaugen durch die Unterdruckhandhabungsvorrichtung 14 ohne Werkstück 16 erfolgt. Aufgrund der strömungstechnischen Eigenschaften der Strömungsverbindungen im Unterdruckerzeuger 12, der Venturi-Düse 24 und der Unterdruckhandhabungsvorrichtung 14 stellt sich im Sauganschluss 20 ein Gleichgewichtsdruck pG ein. Für diese Messung ist vorzugsweise das Abblasventil 38 geschlossen und das Saugventil 36 vollständig geöffnet.

Das freie Ansaugen erfolgt vorzugsweise über eine Diagnosezeitdauer tG, welche so lange gewählt ist, dass sich der Gleichgewichtsdruck zuverlässig einstellen kann (vorzugsweise länger als eine Sekunde). Mittels des Saugdrucksensors 62 kann der Gleichgewichtsdruck tG im Sauganschluss 20 gemessen werden.

Der gemessene Gleichgewichtsdruck pG kann beispielsweise in der Steuereinrichtung 40 hinterlegt werden. Diese kann z.B. den Gleichgewichtsdruck pG über die Kommunikationsschnittstelle 42 einer Zentraleinheit bereitstellen.

In dem in der Figur 3 visualisierten Diagnosezyklus erfolgt nach Messung des Gleichgewichtsdrucks pG eine Handhabung eines Werkstückes. Durch Annäherung des Werkstückes 16 an die Handhabungsvorrichtung 14 kann sich, wie vorstehend erläutert, ein Unterdruck in dem Sauganschluss 20 ausbilden. Wie bereits erläutert, sinkt daher der Druck im Sauganschluss 20 zunächst unter den Kontrollschwellwert H2 ab. Wie bereits erläutert, kann die Messung eines unter dem Kontrollschwellwert H2 liegenden Druck im Sauganschluss 20 als Hinweis darauf gewertet werden, dass das Werkstück 16 an der Unterdruckhandhabungsvorrichtung 14 anliegt.

Bei anliegendem Werkstück 16 sinkt der Druck schließlich auf den Haltewert H1 ab. Wie bereits erläutert, kann dann in einem zweiten Diagnosebereich 64 oder entsprechend in einem zweiten Arbeitsbereich 54 der Druck im Sauganschluss 20 zwischen dem Haltewert H1 und dem Regelhaltewert H1+h1 geregelt werden, um ein sicheres Handhaben des Werkstücks zu gewährleisten.

Wird nach Erreichen des Haltewerts H1 die Unterdruckversorgung deaktiviert, so wird bei dem erfindungsgemäßen Verfahren vorteilhafterweise der zeitliche Verlauf des Drucks im Sauganschluss 20 und/oder eine Druckänderungsrate Δp/Δt gemessen oder bestimmt. Hierzu kann der Saugdrucksensor 32 zur Durchführung einer entsprechenden Messung ausgebildet sein.

An den zweiten Diagnosebereich 64 können sich ein dritter und vierter Diagnosebereich 66 und 68 anschließen, in welchem im dargestellten Beispiel ein Loslassen des Werkstückes erfolgt und die im dargestellten Beispiel dem Verlauf in den Arbeitsbereichen 56 und 58 entsprechen.

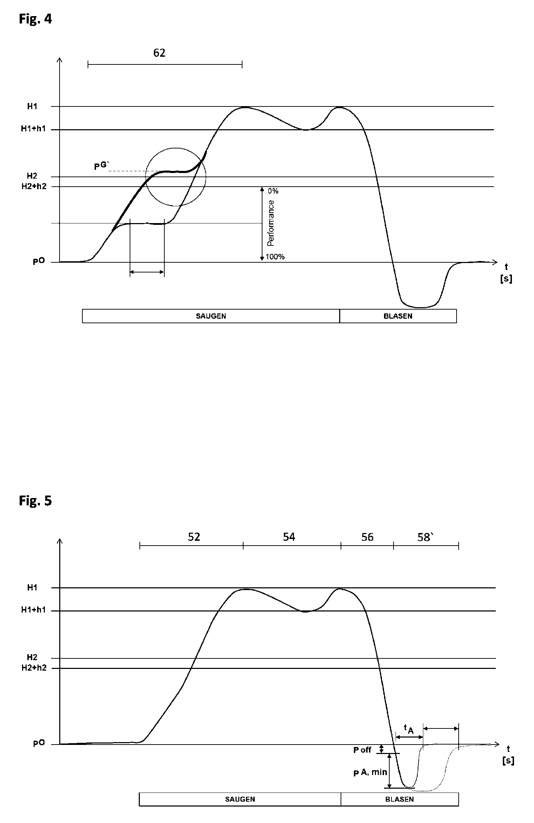

In Figur 4 ist der Druckverlauf im Diagnosezyklus skizziert, wenn das System 10 fehlerhaft arbeitet. Nach Aktivierung der Unterdruckversorgung sinkt der Druck im Sauganschluss 20 auch bei freiem Ansaugen ohne Werkstück auf einen Gleichgewichtsdruck pG' ab, welcher unterhalb des Kontrollschwellwerts H2 liegt. Dies kann beispielsweise darauf zurückzuführen sein, dass aufgrund einer Verschmutzung kein ausreichender Volumenstrom durch die Unterdruckhandhabungsvorrichtung bei freiem Ansaugen eingesaugt werden kann. In diesem Zustand ist es nicht mehr möglich, durch Druckmessung im Sauganschluss 20 auf das Vorhandensein eines Werkstückes zu schließen.

Ein sicherer Handhabungsprozess ist dann mit dem System 10 nicht mehr möglich. Vorteilhafterweise wird daher ein Warnsignal ausgegeben wenn in einem Diagnosezyklus ein Gleichgewichtsdruck unterhalb des Kontrollschwellwerts H2 ermittelt wird (vgl. Fig. 4). Mittels der Steuereinrichtung 40 kann z.B. ein Vergleich des gemessenen Gleichgewichtsdrucks mit dem Kontrollschwellwert H2 erfolgen.

In Figur 5 ist beispielhaft der Druckverlauf im Sauganschluss 20 bei Handhabung eines Werkstückes (Arbeitszyklus) dargestellt, wobei ein energieoptimiertes Abblasen in einem vierten Arbeitsbereich 58' erfolgt.

Nach Aufnahme des Werkstücks im ersten Arbeitsbereich 52 und Handhabung während des zweiten Arbeitsbereichs 54 (vgl. Figur 2) erfolgt ein Absinken des Drucks im Sauganschluss 20 zum Loslassen des Werkstückes (z.B. dritter Arbeitsbereich 56).

Im Folgenden wird davon ausgegangen, dass in einem vorausgehenden Diagnosezyklus der Gleichgewichtsdruck pG ermittelt wurde, und beispielsweise in der Steuereinrichtung 40 hinterlegt wurde.

Unter Verwendung des Gleichgewichtsdrucks pG kann der Abblasvorgang energetisch optimiert werden. In Figur 5 ist gestrichelt der in Figur 2 erläuterte Druckverlauf zum Abblasen des Werkstückes dargestellt. Um den Energieaufwand in dem Arbeitsbereich 58' zu reduzieren, kann aus dem Gleichgewichtsdruck pG ein Minimalabblasdruck pA,min ermittelt werden. Dieser ist so groß gewählt, dass beispielsweise der Strömungswiderstand des Systems überwunden werden kann. Aufgrund der Messung des Gleichgewichtsdrucks pG ist es möglich, einen optimalen Wert für den Abblasdruck pAmin zu bestimmen, so dass einerseits ein zuverlässiges Ablösen des Werkstücks gewährleistet ist und andererseits der Energieaufwand möglichst gering gehalten wird. Um z.B. Systemschwankungen auszugleichen und ein sicheres Ablösen zu gewährleisten, kann zusätzlich zu dem Minimalabblasdruck pAmin ein Sicherheits-Offset p_{off} (im Beispiel ca. 10 mbar) zu dem Minimalabblasdruck pAmin hinzuaddiert werden.

Eine Messung des Druckes im Sauganschluss 20 ermöglicht es außerdem, die Abblaszeitdauer tA, über welche der Druck im Sauganschluss 20 über den Umgebungsdruck p0 ansteigt, möglichst kurz zu halten. Insbesondere kann die Abblaszeitdauer tA gerade so kurz gewählt werden, dass der Druck im Sauganschluss 20 ausgehend vom Umgebungsdruck p0 auf den Minimalabblasdruck pAmin oberhalb des Umgebungsdrucks zuzüglich gegebenenfalls des Sicherheits-Offsets p_{off} ansteigt und ohne Anhalten des Druckes wieder auf den Umgebungsdruck p0 abfällt. Dies ermöglicht einen energiesparenden Betrieb.

## Patentansprüche

1. Verfahren zum Betreiben eines Handhabungssystems (10) umfassend eine Unterdruckhandhabungsvorrichtung (14) zur Handhabung eines Werkstücks (16), und einen Unterdruckerzeuger (12, 48) zum Erzeugen von Unterdruck, wobei der Unterdruckerzeuger (12) einen Sauganschluss (20) zum Ansaugen zur Unterdruckversorgung der Unterdruckhandhabungsvorrichtung (14) aufweist,
**dadurch gekennzeichnet, dass** während des Betreibens des Handhabungssystems (10) Diagnosezyklen durchgeführt werden, wobei ein Diagnosezyklus die folgenden Schritte umfasst:
- Bereitstellen von Unterdruck für die Unterdruckhandhabungsvorrichtung und Ansaugen ohne Werkstück (16), wobei das Ansaugen ohne Werkstück (16) über eine für den Diagnosezyklus vorgebbare Diagnosezeitdauer (tG) erfolgt;
- Messung des sich in dem Sauganschluss (20) einstellenden Gleichgewichtsdrucks (pG) mittels eines Saugdrucksensors (32);
- Überwachen der Veränderung der in den Diagnosezyklen ermittelten Gleichgewichtsdrücke (pG).

2. Verfahren nach einem der vorherigen Ansprüche, **dadurch gekennzeichnet, dass** ein den Gleichgewichtsdruck (pG) repräsentierendes Signal über eine Kommunikationsschnittstelle (42) ausgegeben wird.

3. Verfahren nach einem der vorherigen Ansprüche, **dadurch gekennzeichnet, dass** in einem Arbeitszyklus mittels einer Zeitmesseinrichtung eine erste Druckabfallzeitdauer (t0) gemessen wird, über welche der Druck im Sauganschluss (20) ausgehend vom Umgebungsdruck (p0) auf einen Kontrollschwellwert (H2) abfällt und/oder mittels einer Zeitmesseinrichtung eine zweite Druckabfallzeitdauer (t1) gemessen wird, über welche der Druck im Sauganschluss (20) von dem Kontrollschwellwert (H2) auf einen Haltewert (H1) abfällt.

4. Verfahren nach einem der vorherigen Ansprüche, **dadurch gekennzeichnet, dass** ein Charakterisierungszyklus durchgeführt wird, umfassend die folgenden Schritte:
- Verbinden des Sauganschlusses (20) des Unterdruckerzeugers (12) mit einer Kalibriersaugöffnung (46) des Unterdruckerzeugers (12, 48),
- Bereitstellen von Unterdruck in dem Sauganschluss (20) und Ansaugen durch die Kalibriersaugöffnung (46),
- Messung des sich in dem Sauganschluss (20) einstellenden Kalibrierdrucks.

5. Verfahren nach einem der vorherigen Ansprüche, **dadurch gekennzeichnet, dass** die Unterdruckversorgung deaktiviert wird, nachdem der in dem Sauganschluss (20) gemessene Druck einen Haltewert (H1) erreicht hat oder unterschritten hat, und nach Deaktivierung eine Druckänderungsrate und/oder der Zeitverlauf des im Sauganschluss (20) herrschenden Drucks bestimmt wird.

6. Verfahren nach einem der vorhergehenden Ansprüche, **dadurch gekennzeichnet, dass** der Gleichgewichtsdruck (pG) mit einem vorgegebenen oder vorgebbaren, zwischen dem Umgebungsdruck (p0) und einem Haltewert (H1) liegenden Kontrollschwellwert (H2) verglichen wird, wobei ein Warnsignal ausgegeben wird, wenn der Gleichgewichtsdruck (pG) unterhalb des Kontrollschwellwertes (H2) liegt.

7. Verfahren nach einem der vorherigen Ansprüche, **dadurch gekennzeichnet, dass** in einem Arbeitszyklus nach Aufnahme des Werkstücks (16) der Druck im Sauganschluss (20) auf einen oberhalb des Umgebungsdrucks (p0) liegenden Abblasdruck ansteigt, wobei der Abblasdruck (pA; pAₘᵢₙ+p_{off}) in Abhängigkeit des Gleichgewichtsdrucks (pG) bestimmt wird.

8. Unterdruckerzeuger (12, 48) zur Durchführung des Verfahrens nach einem der Ansprüche 1 - 7, mit einem Sauganschluss (20) zum Ansaugen, mit einem Saugdrucksensors (32) zur Messung eines Druckes im Sauganschluss (20), und mit einer Kommunikationsschnittstelle (42) zur Übertragung von Messwerten des Saugdrucksensors (20), **dadurch gekennzeichnet, dass** der sich beim Ansaugen ohne Werkstück (16) über eine vorgebbare Diagnosezeitdauer (tG) einstellende Gleichgewichtsdruck gemessen wird.

9. Unterdruckerzeuger (12, 48) nach Anspruch 9, **dadurch gekennzeichnet, dass** ein steuerbares Kalibrierventil (44) derart vorgesehen ist, dass der Sauganschluss (20) wahlweise zumindest mit einem Betriebsausgang (43) für eine Unterdruckhandhabungsvorrichtung (14), oder mit einer Kalibriersaugöffnung (46) des Unterdruckerzeugers (12) verbunden werden kann.

## Claims

1. A method for operating a manipulator system (10) including: a vacuum manipulator device (14) for manipulating a workpiece (16), and a vacuum generator (12, 48) for generating a vacuum, wherein the vacuum generator has a suction connection (20) for suctioning in order to provide a vacuum supply for the vacuum manipulator device (14),
**characterized in that** diagnosis cycles are executed during operation of the manipulator system (10), wherein said diagnosis cycle comprising the steps of:
providing a vacuum for the vacuum manipulator device, and suctioning without a workpiece (16) over the course of a predefined diagnosis time period (tG) for the diagnosis cycle;
measuring equilibrium pressure obtained at the suction connection (20) with a suction pressure sensor (32);
monitoring changes to the equilibrium pressure (pG) determined in the diagnosis cycles.

2. Method according to one of the preceding claims, **characterized in that** a signal representing the equilibrium pressure (pG) is issued via a communications interface (42).

3. Method according to one of the preceding claims, **characterized in that** a first pressure decrease time period (t0) is measured in a work cycle via a timing device, over the course of which pressure at the suction connection (20) decreases from ambient pressure (p0) to a control threshold value (H2); and/or a second pressure decrease time period (t1) is measured with the timing device, over the course of which pressure at the suction connection (20) decreases from the control threshold value (H2) to a holding value (H1).

4. Method according to one of the preceding claims, **characterized in that** a characterization cycle is executed, wherein said characterization cycle comprising the steps of:
connecting the suction connection (20) on the vacuum generator (12) to a calibration suction hole (46) on the vacuum generator (12, 48);
providing a vacuum at the suction connection (20) and suctioning through the calibration suction hole (46);
measuring a calibration pressure obtained at the suction connection (20).

5. Method according to one of the preceding claims, **characterized in that** the vacuum supply is deactivated after pressure measured at the suction connection (20) reaches, or has fallen below, a holding value (H1), and after deactivation, a pressure change rate and/or elapsed time for the pressure prevailing at the suction connection (20) are determined.

6. Method according to one of the preceding claims, **characterized in that** the equilibrium pressure (pG) is compared with a predefined control threshold value laying between ambient pressure (p0) and a holding value (H1), wherein a warning signal is issued if the equilibrium pressure (pG) lies beneath the control threshold value (H2).

7. Method according to one of the preceding claims, **characterized in that** the pressure at the suction connection (20) during a work cycle, after picking up the workpiece (16), increases to a blow-off pressure lying above ambient pressure (p0), wherein the blow-off pressure (pA; pAₘᵢₙ+p_{off}) is determined in relation to the equilibrium pressure (pG).

8. A vacuum generator (12, 48) for executing the method according to claims 1 to 7, said vacuum generator (12, 48) comprising a suction connection (20) for suctioning, a suction pressure sensor (32) for measuring pressure at the suction connection (20), and a communications interface (42) for transmitting measurement values from the suction pressure sensor (20), **characterized in that** the equilibrium pressure is measured, obtained during suctioning without a workpiece (16) over the course of a predefined diagnosis time period (tG).

9. Vacuum generator (12, 48) according to claim 9, **characterized in that** further including a controllable calibration valve (44), whereby the suction connection (20) can be connected selectively to at least one operation output (43) for a vacuum manipulator device (14), or to a calibration suction hole (46) on the vacuum generator (12).

## Revendications

1. Procédé pour faire fonctionner un système de manipulation (10), comprenant un dispositif de manipulation par dépression (14) destiné à manipuler une pièce à usiner (16), et un générateur de dépression (12, 48) destiné à générer de la dépression, ledit générateur de dépression (12) présentant un raccord d'aspiration (20) pour l'aspiration destiné à alimenter en dépression ledit dispositif de manipulation par dépression (14),
**caractérisé par le fait que**, pendant que l'on fait fonctionner le système de manipulation (10), des cycles de diagnostic sont mis en oeuvre, un cycle de diagnostic comprenant les étapes suivantes consistant:
- à fournir de la dépression pour le dispositif de manipulation par dépression et à aspirer sans pièce à usiner (16), l'aspiration sans pièce à usiner (16) se faisant sur une durée de diagnostic (tG) apte à être prédéterminée pour le cycle de diagnostic;
- à mesurer, au moyen d'un capteur de pression d'aspiration (32), la pression d'équilibre (pG) s'établissant dans ledit raccord d'aspiration (20);
- à surveiller le changement des pressions d'équilibre (pG) déterminées dans les cycles de diagnostic.

2. Procédé selon l'une quelconque des revendications précédentes, **caractérisé par le fait qu'**un signal représentant la pression d'équilibre (pG) est émis via une interface de communication (42).

3. Procédé selon l'une quelconque des revendications précédentes, **caractérisé par le fait que**, dans un cycle de travail, on mesure, au moyen d'un dispositif de mesure de temps, une première durée de chute de pression (t0) sur laquelle la pression dans le raccord d'aspiration (20) baisse en passant à partir de la pression ambiante (p0) à une valeur de seuil de contrôle (H2), et/ou on mesure, au moyen d'un dispositif de mesure de temps, une deuxième durée de chute de pression (t1) sur laquelle la pression dans le raccord d'aspiration (20) baisse en passant de ladite valeur de seuil de contrôle (H2) à une valeur de maintien (H1).

4. Procédé selon l'une quelconque des revendications précédentes, **caractérisé par le fait qu'**un cycle de caractérisation est mis en oeuvre, comprenant les étapes suivantes consistant:
- à relier le raccord d'aspiration (20) du générateur de dépression (12) à une ouverture d'aspiration de calibrage (46) du générateur de dépression (12, 48),
- à fournir de la dépression dans le raccord d'aspiration (20) et à aspirer à travers ladite ouverture d'aspiration de calibrage (46),
- à mesurer la pression de calibrage s'établissant dans le raccord d'aspiration (20).

5. Procédé selon l'une quelconque des revendications précédentes, **caractérisé par le fait que** l'alimentation en dépression est désactivée après que la pression mesurée dans le raccord d'aspiration (20) a atteint une valeur de maintien (H1) ou est devenue inférieure à celle-ci, et que, après la désactivation, on détermine un taux de changement de pression et/ou l'évolution temporelle de la pression régnant dans le raccord d'aspiration (20).

6. Procédé selon l'une quelconque des revendications précédentes, **caractérisé par le fait que** la pression d'équilibre (pG) est comparée à une valeur de seuil de contrôle (H2) prédéterminée ou apte à être prédéterminée et située entre la pression ambiante (p0) et une valeur de maintien (H1), un signal avertisseur étant émis lorsque la pression d'équilibre (pG) est inférieure à la valeur de seuil de contrôle (H2).

7. Procédé selon l'une quelconque des revendications précédentes, **caractérisé par le fait que**, dans un cycle de travail, après avoir reçu la pièce à usiner (16), la pression dans le raccord d'aspiration (20) augmente en passant à une pression d'échappement supérieure à la pression ambiante (p0), la pression d'échappement (pA; pAₘᵢₙ+p_{off}) étant déterminée en fonction de la pression d'équilibre (pG).

8. Générateur de dépression (12, 48) pour la mise en oeuvre du procédé selon l'une quelconque des revendications 1 à 7, comprenant un raccord d'aspiration (20) destiné à aspirer, un capteur de pression d'aspiration (32) destiné à mesurer une pression dans le raccord d'aspiration (20) ainsi qu'une interface de communication (42) destinée à transmettre des valeurs de mesure du capteur de pression d'aspiration (20), **caractérisé par le fait que** l'on mesure la pression d'équilibre s'établissant lors de l'aspiration sans pièce à usiner (16) sur une durée de diagnostic (tG) apte à être prédéterminée.

9. Générateur de dépression (12, 48) selon la revendication 9, **caractérisé par le fait qu'**une vanne de calibrage (44) apte à être commandée est prévue de telle manière que le raccord d'aspiration (20) peut être relié au choix au moins à une sortie de fonctionnement (43) pour un dispositif de manipulation par dépression (14) ou à une ouverture d'aspiration de calibrage (46) du générateur de dépression (12).
